# EUROPÄISCHE PATENTANMELDUNG

(11) **EP 2 249 134 A1**
(43) Veröffentlichungstag der Anmeldung: **10.11.2010**
(21) Anmeldenummer: 10159918.1
(22) Anmeldetag: 14.04.2010
(51) Int. Cl.: G01F 23/24

(54) **Füllstandsdetektionsvorrichtung**

(30) Priorität: 06.05.2009 DE 102009020770
(71) Anmelder: Robert Bosch GmbH, 70442 Stuttgart (DE)
(72) Erfinder: Kamp, Norbert, 71711 Steinheim (DE); Kaluza, Jan, 71034 Böblingen (DE); Lutz, Andreas, 71292 Friolzheim (DE); Buelow, Dirk, 70711 Leifelden-Echterdingen (DE); Kretschmers, Horst, 71397, Leutenbach (DE); Grothe, Joerg, 70806 Kornwestheim (DE)

(57) **Zusammenfassung**

Vorgestellt wird eine Füllstandsdetektionsvorrichtung (23) zur Ermittlung eines Füllstandes in einem Speicherbehälter (19) für ein flüssiges Reduktionsmittel zur Anwendung in einer Abgasnachbehandlungseinrichtung (3), mit einem Füllstandsdetektor (21) und einer Treiber- und Auswerteeinrichtung (22), die mit elektrischen Leitungen (47a, 47b, 47c) miteinander verbunden sind und die durch mit den elektrischen Leitungen in Reihe geschalteten Kondensatoren (45) in Bezug auf Gleichströme voneinander entkoppelt und in Bezug auf Wechselströme miteinander gekoppelt sind. Die Füllstandsdetektionsvorrichtung zeichnet sich dadurch aus, dass die Kondensatoren (45) durch die elektrischen Leitungen (47a, 47b, 47c) von der Treiber- und Auswerteeinrichtung (22) getrennt als Teil des Füllstandsdetektors (21) angeordnet sind.

## Beschreibung

Die Erfindung betrifft eine Füllstandsdetektionsvorrichtung zur Ermittlung eines Füllstandes in einem Speicherbehälter für ein flüssiges Reduktionsmittel zur Anwendung in einer Abgasnachbehandlungseinrichtung nach dem Oberbegriff des Anspruchs 1.

### Stand der Technik

Füllstandsdetektionsvorrichtungen zur Ermittlung eines Füllstands in einem Speicherbehälter für ein flüssiges Reduktionsmittel zur Einleitung in eine Abgasnachbehandlungseinrichtung sind vom Markt her bekannt. Abgasnachbehandlungseinrichtungen sind vom Gesetzgeber gefordert. Sie reduzieren die in den Rohemissionen einer Brennkraftmaschine enthaltenen umweltschädlichen Stickoxide. Bspw. bei einem Verfahren der selektiven katalytischen Reduktion (SCR) werden flüssige Reduktionsmittel, wie z.B. eine Harnstoff-Wasser-Lösung, angewandt. Beim SCR-Verfahren wird aus der Harnstoff-Wasser-Lösung durch eine Hydrolysereaktion Ammoniak frei gesetzt, das im Abgasstrang der Brennkraftmaschine in einem Katalysator mit umweltschädlichen Stickoxiden zu harmlosem Stickstoff und Wasser reagiert. Dieses sogenannte SCR-Verfahren zur Abgasreinigung ist aus dem Stand der Technik bekannt.

Die Füllstandsdetektionsvorrichtung wird genutzt, um den Füllstand im Speicherbehälter für das flüssige Reduktionsmittel (z.B. sog. "AdBlue") zu erfassen und um ein rechtzeitiges Nachfüllen des Reduktionsmittels veranlassen zu können. So sind bspw. Füllstandsdetektoren im Einsatz, bei denen Messelektroden unterschiedlicher Länge in das Reduktionsmittel eintauchen. Anhand von elektrischen Messungen, die die elektrische Leitfähigkeit oder die kapazitiven Eigenschaften des Reduktionsmittels ausnutzen, kann der Füllstand dadurch ermittelt werden, dass erkannt wird, welche Elektroden in das Reduktionsmittel noch eintauchen. Dies ist dann ein Indiz für den Füllstand. Die Messungen werden bevorzugt mit einem pulsweitenmodulierten (PWM) Verfahren mit möglichst kurzen Signalimpulsen und einem kleinen Tastverhältnis durchgeführt, um so eine mögliche Elektrolyse des Reduktionsmittel zu verhindern. Die Elektrolyse würde das Reduktionsmittel (z.B. Harnstoff) und die Elektroden verändern, was das Reduktionsmittel für den eigentlichen Gebrauch im Katalysator unbrauchbar macht und außerdem die Elektroden verschleißt. Zusätzlich würde bei der Elektrolyse Wasserstoff entstehen, was in Verbindung mit Sauerstoff explosives Knallgas bildet.

Die bekannten Füllstandsdetektionsvorrichtungen arbeiten bevorzugt mit einem kapazitiven Sensor, der eine kapazitive Entkopplung im Steuergerät benötigt. Diese Füllstandsdetektionsvorrichtungen haben den Nachteil, dass sie den Füllstandsdetektor nur sehr aufwendig in einem Fehlerfall, bspw. vor einem Kurzschluss zu einer Batteriespannung, schützen können. Dieser Fehlerfall kann bspw. durch Wegscheuern einer Isolierung an den elektrischen Zuführungskabeln zum Füllstandsdetektor oder durch andere fehlerbedingte Einflüsse entstanden sein. Dadurch kann der Kurzschlussstrom zunächst ungehindert in den Füllstandsdetektor fließen und über die elektrische leitende Flüssigkeit nach Masse abfließen, was zu einer unerwünschten Elektrolyse des Reduktionsmittels führen kann. Dies wird nach einem Diagnostizieren in der Auswerteeinrichtung durch eine zusätzliche Schaltung und Softwarefunktion in der Auswerteeinrichtung gestoppt. Bei der dazu nötigen Softwarefunktion kann man nicht auf Standardapplikationen zurückgreifen, sondern es muss für diesen Sonderfall eine eigene Funktion entwickelt werden. Dies ist kostentreibend. Die elektronische Auswerteeinrichtung ist bekanntermaßen am Eingang durch einen Kondensator, der am Eingang der Auswerteeinrichtung angeordnet ist, vor dem Kurzschlussstrom geschützt.

### Offenbarung der Erfindung

Aufgabe der Erfindung ist es, eine zuverlässig arbeitende, kostengünstige Füllstandsdetektionsvorrichtung anzugeben, bei der eine Elektrolyse des Reduktionsmittels im Speicherbehälter durch einfache Mittel in jedem Fall verhindert wird.

Die Aufgabe wird erfindungsgemäß dadurch gelöst, dass der Kondensator durch die elektrische Leitung von der Treiber- und Auswerteeinrichtung getrennt als Teil des Füllstandsdetektors angeordnet ist. Der Kondensator ist dabei am Eingang des Füllstandsdetektors angeordnet und dient als Schutzmaßnahme vor Gleichstrom, bspw. bei einem Kurzschluss zur Batterie, der in einem Fehlerfall auftreten könnte. Der Erfindung liegt die Idee zu Grunde, einerseits den Füllstandsdetektor durch ein einfaches diskretes Bauelement, eben den Kondensator, vor dem Kurzschlussstrom (Gleichstrom) zu schützen und andererseits die Treiber- und Auswerteeinrichtung durch einfache Softwaremaßnahmen zu schützen, da der Kurzschlussstrom im Wesentlichen einem vordefinierbaren Fall entspricht und somit leicht mit einer Standardsoftware zu diagnostizieren ist. Bei erkanntem Fehler können dann durch Softwareentscheidungen in der Treiber- und Auswerteeinrichtung Sicherungsmaßnahmen getroffen werden, die jetzt nur noch die Treiber- und Auswerteeinrichtung betreffen müssen. So kann bspw. zumindest als erste Schutzmaßnahme ein Schalter in der Zuleitung zur Masse geöffnet werden. Die Anwendung des Kondensators auf der Eingangsseite des Füllstandsdetektors ist möglich, da die Ermittlung des Füllstandes im Speicherbehälter bekanntermaßen mit einem pulsweitenmodulierten Signal (z.B. bei ca. 5 kHz) betrieben wird. Der Kondensator kann dabei so dimensioniert werden, dass er bei dieser Frequenz niederohmig, also durchlässig ist. Durch den Einsatz von Standardsoftware zur Fehlererkennung und dem Kondensator zur Entkopplung ist die Erfindung einfach zu realisieren und ist damit auch kostengünstig.

Für die Erfindung wichtige Merkmale finden sich ferner in der nachfolgenden Beschreibung und in der Zeichnung, wobei die Merkmale sowohl in Alleinstellung als auch in unterschiedlichen Kombinationen für die Erfindung wichtig sein können, ohne dass hierauf jeweils explizit hingewiesen wird. Vorteilhafte Weiterbildungen finden sich in den Unteransprüchen.

### Kurzbeschreibung der Figuren

Nachfolgend wird anhand der Figuren ein Ausführungsbeispiel der Erfindung beispielhaft erläutert. Es zeigen:
- Figur 1: eine schematische Darstellung einer Brennkraftmaschine mit einer Abgasnachbehandlungseinrichtung;
- Figur 2: eine detaillierte Darstellung eines Füllstandsdetektors und einer Treiber- und Auswerteeinrichtung aus Figur 1;
- Figur 3: eine Prinzipdarstellung des Füllstandsdetektors und der Treiber- und Auswerteeinrichtung aus dem Stand der Technik;
- Figur 4: eine Prinzipdarstellung des erfindungsgemäßen Füllstandsdetektors und Treiber- und Auswerteeinrichtung; und
- Figur 5: ein Diagramm mit unterschiedlich möglichen Stromlevel im Füllstandsdetektor.

### Detaillierte Beschreibung

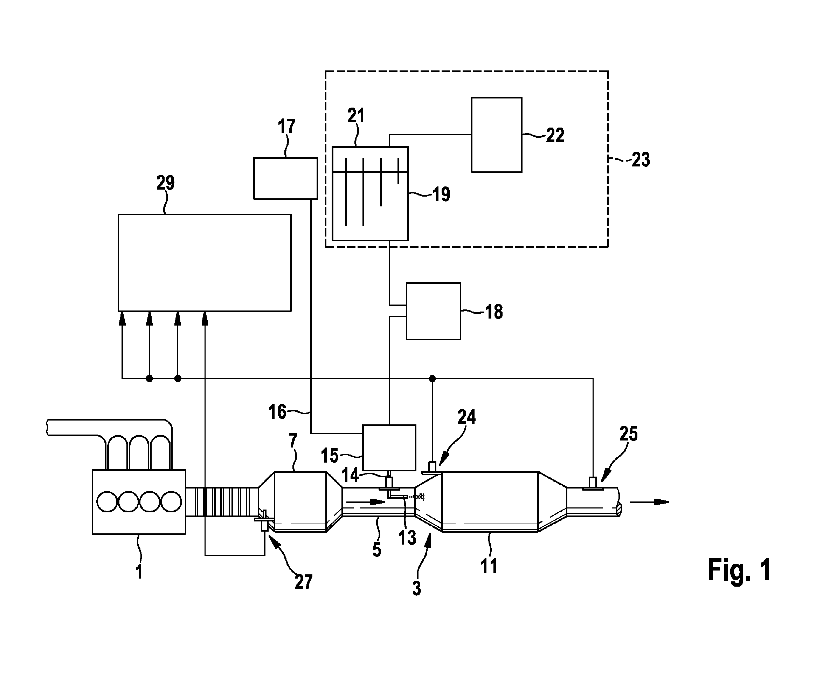

In Figur 1 ist eine Brennkraftmaschine 1 mit einer Abgasnachbehandlungseinrichtung 3 stark vereinfacht und schematisch dargestellt. Die Abgasnachbehandlungseinrichtung 3 weist ein Abgasrohr 5, einen Oxidationskatalysator 7 und einen SCR-Katalysator 11 auf. Nicht dargestellt ist ein Partikelfilter, der üblicherweise stromabwärts des Oxidationskatalysators 7 angeordnet wird. Die Strömungsrichtung des Abgases durch das Abgasrohr 5 ist durch Pfeile (ohne Bezugszeichen) angedeutet.

Um den SCR-Katalysator 11 mit einem Reduktionsmittel, z.B. einer Harnstoff-Wasser-Lösung zu versorgen, ist stromaufwärts des SCR-Katalysators 11 im Abgasrohr 5 ein Sprührohr 13 für die Harnstoff-Wasser-Lösung angeordnet, über das die Harnstoff-Wasser-Lösung bei Bedarf mittels Druckluft stromaufwärts des SCR-Katalysators 11 in das Abgasrohr 5 eingespritzt wird. Das Sprührohr 13 ist über eine Dosierleitung 14 mit dem Dosiermodul 15 verbunden. Dazu ist an dem Dosiermodul 15 eine Druckleitung 16 zum Zuführen von Druckluft von einer Drucklufterzeugungseinheit 17 oder einem Druckluftbehälter vorgesehen.

Das gesamte Dosiersystem umfasst neben dem Sprührohr 13, der Dosierleitung 14 und dem Dosiermodul 15 eine Dosierpumpe 18 sowie einen Speicherbehälter 19 für die Harnstoff-Wasser-Lösung auf. Der Speicherbehälter 19 und die Dosierpumpe 18 sowie die Dosierpumpe 18 und das Dosiermodul 15 sind jeweils durch Leitungen (ohne Bezugszeichen) hydraulisch miteinander verbunden, so dass die Dosierpumpe 18 das Dosiermodul 15 mit Reduktionsmittel aus dem Speicherbehälter 19 versorgt.

An dem Speicherbehälter 19 ist ein Füllstandsdetektor 21 angeordnet. Der Füllstandsdetektor 21 ist elektrisch mit einer Treiber- und Auswerteeinrichtung 22 verbunden. Die Treiber- und Auswerteeinrichtung 22 kann eine separate Einrichtung sein, sie kann aber auch in ein Steuergerät 29 der Brennkraftmaschine 1 integriert sein. Der Füllstandsdetektor 21 und die Treiber- und Auswerteeinrichtung 22 bilden zusammen die Füllstandsdetektionsvorrichtung 23.

Der Vollständigkeit halber sei noch auf die in der Abgasanlage angeordneten Sensoren, nämlich einen Stickoxid-Sensor 25 sowie Temperatur-Sensoren 24 und 27 hingewiesen, mit denen der Zustand des Abgases erfasst wird. Diese Sensoren 24, 25 und 27 sind über Signalleitungen (ohne Bezugszeichen) mit dem Steuergerät 29 verbunden, das im Übrigen die Brennkraftmaschine 1 steuert.

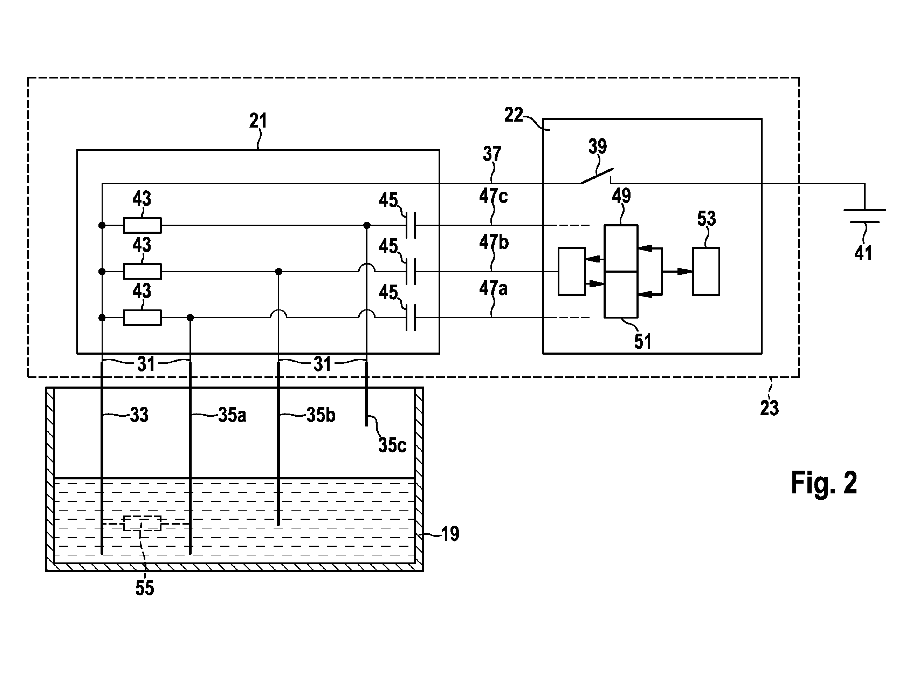

Figur 2 zeigt die Füllstandsdetektionsvorrichtung 23 in einem bevorzugten Ausführungsbeispiel im Detail. Der Füllstandsdetektor 21 umfasst im Wesentlichen vier Verbindungsleitungen 31 zu vier Elektroden 33, 35a, 35b, 35c, die in den Speicherbehälter 19 eintauchen. Dabei stellt die in Figur 2 links dargestellte Elektrode eine Basiselektrode 33 dar; die weiteren Elektroden 35a, 35b, 35c sind parallel zur Basiselektrode 33 angeordnet und stellen Messelektroden 35a, 35b, 35c dar. Die drei Messelektroden 35a, 35b, 35c haben jeweils eine unterschiedliche Länge, wobei eine erste Messelektrode 35a die gleiche Länge wie die Basiselektrode 33 aufweist und annähernd bis zu einer Grundfläche des Speicherbehälters 19 reicht. Eine zweite Messelektrode 35b ist im Vergleich zur ersten Messelektrode 35a gering verkürzt, eine dritte Messelektrode 35c reicht nur mit einer geringen Länge in den Speicherbehälter 19 hinein.

Die vier Verbindungsleitungen 31 sind zum Füllstandsdetektor 21 geführt. Die Verbindung der Basiselektrode 33 ist anschließend direkt über eine erste Kabelverbindung 37 durch die Treiber- und Auswerteeinrichtung 22 geschleift und anschließend über einen Schalter 39 an einen elektrischen Bezugspunkt 41 (z.B. Masse) weitergeführt. Die Verbindungen der Messelektroden 35a, 35b, 35c weisen zur Basiselektrode 33 hin jeweils einen konstanten Widerstand 43 auf und sind im Füllstandsdetektor 21 jeweils über einen Kondensator 45 und jeweils eine zweite Kabelverbindung 47a, 47b, 47c zur Treiber- und Auswerteeinrichtung 22 geführt. Die Treiber- und Auswerteeinrichtung 22 umfasst im Wesentlichen für jede Messelektrode 35a, 35b, 35 c je einen Pulsweitenmodulator 49, ein Signalformungsnetzwerk 50 und einen Analog-Digital-Wandler 51. Fig. 2 zeigt aus Gründen der Übersichtlichkeit nur einen Pulsweitenmodulator 49, ein Signalformungsnetzwerk 50 und einen Analog-Digital-Wandler 51, die an die Leitung 47b angeschlossen sind. Ein Prozessor 53 steuert den Pulsweitenmodulator 49 an und empfängt Signale von dem Analog-Digital-Wandler 51. Das Signalformungsnetzwerk ist an die zugehörige Messelektrode, hier die Messelektrode 35b, angeschlossen, so dass das vom Pulsweitenmodulator 49 ausgehende Signal in Abhängigkeit von elektrischen Einflüssen, die über die Messelektrode 35b eingespeist werden, verändert wird. In dem elektrischen Einfluss bildet sich vor allem ab, ob die Messelektrode 35b in die Flüssigkeit eintaucht und dadurch über die Flüssigkeit leitend mit der Basiselektrode 33 verbunden ist. Damit bildet sich indirekt eine grobe Füllstandsinformation in dem Signal ab, das an dem Analog-Digital-Wandler 51 anliegt und in digitalisierter Form zur Auswertung an den Prozessor 53 übergeben wird.

Der Prozessor 53 ist dazu eingerichtet, insbesondere dazu programmiert, die Messelektroden 35 anzusteuern und das von den Analog-Digital-Wandlern 51 empfangene digitalisierte Signal auszuwerten. Er ist insbesondere dazu programmiert, die Signale zur Steuerung des Verfahrens der Füllstandsdetektion mit einer Fehlererkennungsroutine auszuwerten.

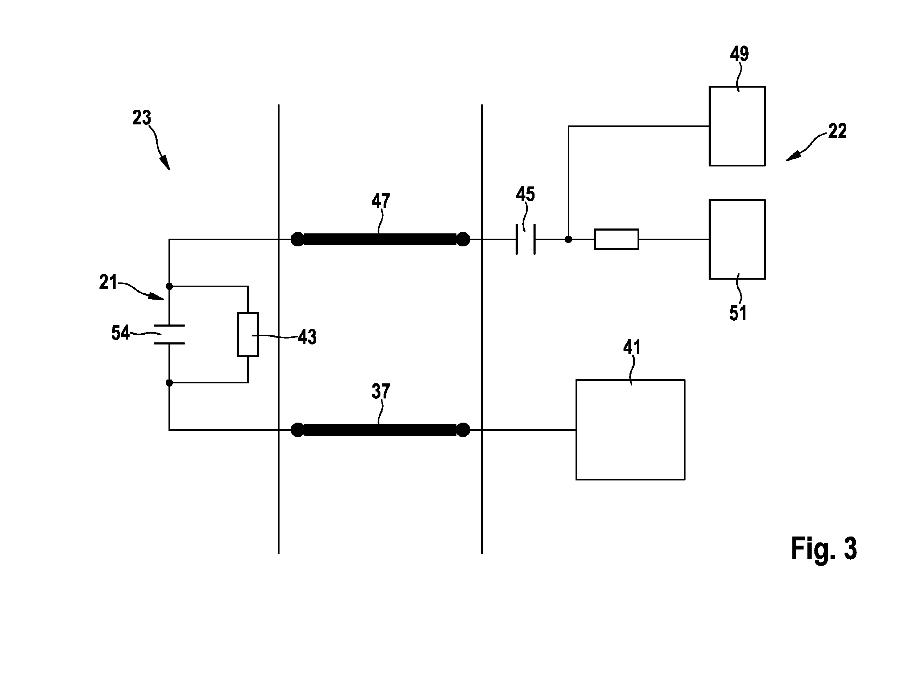

Figur 3 zeigt schematisch die Füllstandsdetektionsvorrichtung 23 aus dem Stand der Technik. Dabei gilt, dass solche Elemente und Bereiche, welche funktionsäquivalent sind zu Elementen der Figur 2, die gleichen Bezugszeichen tragen und nicht nochmals im Detail erläutert werden. Der Füllstandsdetektor 21 ist mit samt den Elektroden 33 und 35 durch einen einzigen festen Widerstand 43 und einem dazu parallel geschalteten Kondensator 54 symbolisch dargestellt. Im Gegensatz zur Fig. 2 weist der Füllstandsdetektor 21 der Fig. 3 den Kondensator 45 nicht auf. Dieser Kondensator 45 ist im Stand der Technik in der Treiber- und Auswerteeinrichtung 22 am Eingang der Treiber- und Auswerteeinrichtung 22 angeordnet.

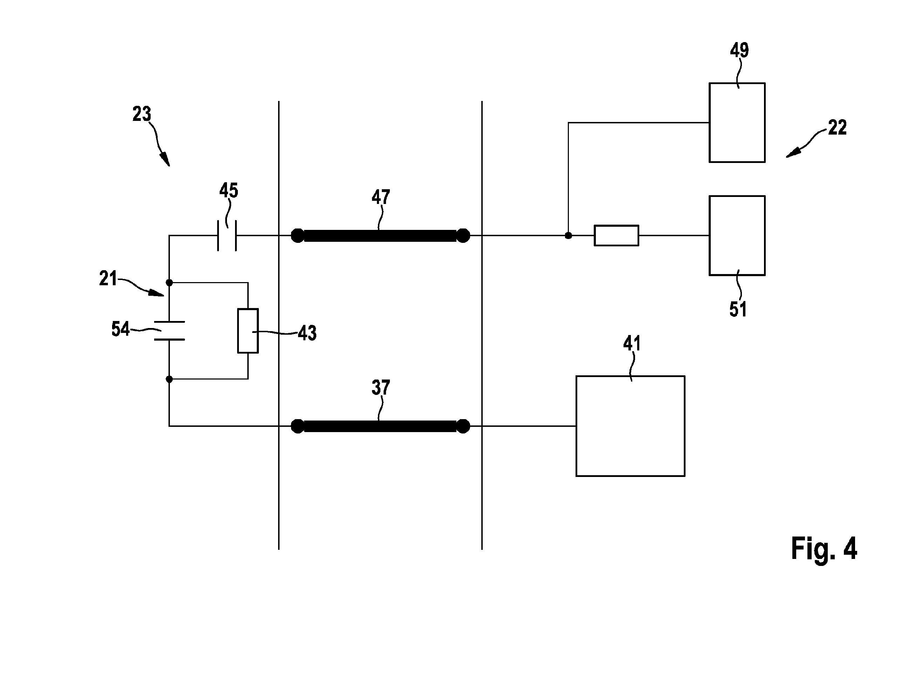

Bei der Erfindung ist der Kondensator 45 jeweils von der Treiber- und Auswerteeinrichtung 22 in den Füllstandsdetektor 21 verlagert worden. Figur 4 zeigt den erfindungsgemäßen Zustand.

Die Füllstandsdetektionsvorrichtung 23 aus dem Stand der Technik arbeitet nach folgendem Verfahren: Es wird dabei angenommen, dass der Füllstandsdetektor 21 die gleiche Elektrodenanordnung aufweist, wie sie in Figur 2 dargestellt ist. Für di Erläuterung wird daher zunächst auf die Fig. 2 Bezug genommen. Zwischen der Basiselektrode 33 und einer der Messelektroden 35 stellt das flüssige, elektrisch leitfähige Reduktionsmittel bei einem Eintauchen der entsprechenden Messelektrode 35 einen elektrischen Widerstand 55 dar, der deutlich geringer ist, als der konstante Widerstand 43. Elektrisch gesehen sind beide Widerstände 43 und 55 parallelgeschaltet, was bedeutet, dass der Gesamtwiderstand der beiden quasi parallel geschalteten Widerstände 43 und 55 ebenfalls deutlich kleiner ist als der konstante Widerstand 43. Da Messelektroden 35 unterschiedlicher Länge mit der jeweils separaten Kabelverbindung 47 in das Reduktionsmittel eintauchen, kann die Treiber- und Auswerteeinrichtung 22 einen Füllstand, insbesondere einen kritischen Füllstand, ermitteln, da bei einem Nichteintauchen der Messelektroden 35 nur der konstante Widerstand 43 für die Treiber- und Auswerteeinrichtung 22 wirkt und bei eingetauchten Messelektroden 35 der Gesamtwiderstand aus den parallelgeschalteten Widerständen 43 und 55 wirkt.

Für die Widerstandsmessung ist es notwendig, dass eine Spannung zwischen der Basiselektrode 33 und den Messelektroden 35 angelegt wird, wodurch ein Strom durch das Reduktionsmittel fließt. Um eine Elektrolyse des Reduktionsmittels durch den Messstrom zu verhindern, wird die Widerstandsmessung mit einem pulsweitenmodulierten Signal mit kleinem Tastverhältnis durchgeführt, so dass der Signalimpuls sehr kurz ist.

Durch einen Fehler im Bereich der Füllstandsdetektionsvorrichtung 23, bspw. durch Abscheuern einer Isolierung der elektrischen Zuleitungskabel 47 der Messelektroden 35 ist es möglich, dass es zu einem Kurzschluss kommt und dem elektrischen Zuleitungskabel 47 und damit auch dem Füllstandsdetektor 21 ein Batteriestrom (Gleichstrom) zugeführt wird. Dies hätte eine dauernde Elektrolyse des flüssigen Reduktionsmittels zur Folge. Die Treiber- und Auswerteeinrichtung 22 ist durch die erfindungsgemäße Anordnung des Kondensators 45 geschützt, da diese die Messelektroden 35a, 35b, 35c gleichstrommäßig von den Leitungen 47 entkoppelt.

Mit anderen Worten: Die erfindungsgemäße Anordnung des Kondensators 45 am Eingang des Füllstandsdetektors 21 unterbindet eine Elektrolyse des Reduktionsmittels im Speicherbehälter 19 im Fehlerfall. Der jetzt im Fehlerfall an der Treiber- und Auswerteeinrichtung 22 anliegende Kurzschlussstrom stellt einen im Wesentlichen vordefinierbaren Zustand bspw. am Eingang des Analog-Digital-Wandlers dar, der in der Treiber- und Auswerteeinrichtung 22 durch eine gezielte Abfrage in der Software erkannt werden kann. Die Schutzmechanismen werden dann durch softwaregesteuerte Aktionen, wie bspw. ein Öffnen des Schalters 39 und eingeleitet.

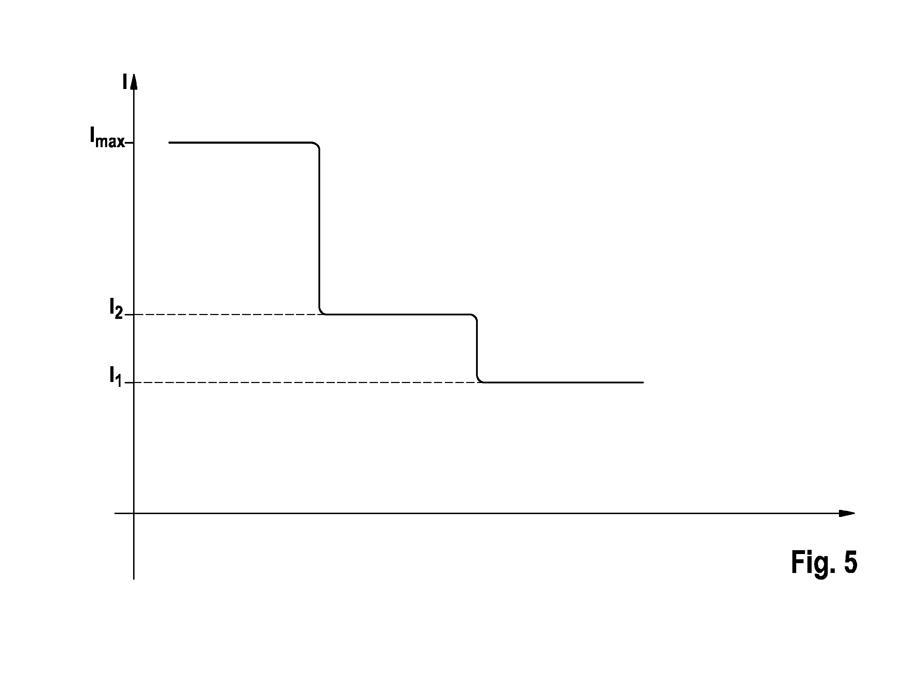

Figur 5 zeigt ein Diagramm mit unterschiedlichen Stromleveln, die in der Treiber- und Auswerteeinrichtung 22 während des Betriebs auftreten können und die von dem erfindungsgemäßen Verfahren diagnostiziert werden. Der Strom I₁ stellt den Strom dar, der zwischen einer nicht in das Reduktionsmittel eingetauchten Messelektrode über den festen Widerstand 43 fließt. Strom I₂ stellt den Strom dar, der zwischen einer in das Reduktionsmittel eingetauchten Messelektrode über den festen Widerstand 43 und dem parallelgeschalteten elektrischen Widerstand 55 der Reduktionsflüssigkeit fließt. Es sei an dieser Stelle darauf hingewiesen, dass die Darstellung Fig. 5 rein qualitativ ist und dass I₁ und I₂ bei einer Erzeugung durch ein pulsweitenmoduliertes Signal diese Pulsweitenmodulation abbilden würden. Fig. 5 veranschaulicht jedoch gut die qualitative Auswirkung des mit dem Flüssigkeitstand variierenden Widerstands.

Durch die separate elektrische Zuführung der einzelnen Messelektroden in die Treiber- und Auswerteeinrichtung 22 ist es möglich, die noch in das Reduktionsmittel eingetauchten Messelektroden 35 zu identifizieren und - wenn nötig bei einem diagnostizierten geringem Füllstand des Reduktionsmittels - einen optischen oder akustischen Warnhinweis, bspw. am Armaturenbrett des Kraftfahrzeugs, auszugeben, wenn nur noch zwei oder gar eine einzige Messelektrode 35 eintauchen. Iₘₐₓ zeigt den im Fehlerfall auftretenden Kurzschlussstrom, bei dem der Füllstandsdetektor 21 durch den Kondensator 45 geschützt ist und andererseits die Treiber- und Auswerteeinrichtung 22 den Fehlerfall erkennt und entsprechende notwendige Schutzmaßnahmen - wie oben beschrieben - einleitet.

## Patentansprüche

1. Füllstandsdetektionsvorrichtung (23) zur Ermittlung eines Füllstandes in einem Speicherbehälter (19) für ein flüssiges Reduktionsmittel zur Anwendung in einer Abgasnachbehandlungseinrichtung (3), mit einem Füllstandsdetektor (21) und einer Treiber- und Auswerteeinrichtung (22), die mit elektrischen Leitungen (47a, 47b, 47c) miteinander verbunden sind und die durch mit den elektrischen Leitungen in Reihe geschalteten Kondensatoren (45) in Bezug auf Gleichströme voneinander entkoppelt und in Bezug auf Wechselströme miteinander gekoppelt sind, **dadurch gekennzeichnet, dass** die Kondensatoren (45) durch die elektrischen Leitungen (47a, 47b, 47c) von der Treiber- und Auswerteeinrichtung (22) getrennt als Teil des Füllstandsdetektors (21) angeordnet sind.

2. Füllstandsdetektionsvorrichtung (23) nach Anspruch 1, **dadurch gekennzeichnet, dass** der Füllstandsdetektor (21) eine Basiselektrode (33) und mindestens eine Messelektrode (35a, 35b, 35c) aufweist, wobei die Basiselektrode (33) und jede Messelektrode (35a, 35b, 35c) mit einer separaten elektrischen Leitung (37, 47a, 47b, 47c) mit der Treiber- und Auswerteeinrichtung (23) verbunden sind, und wobei jeder der Kondensatoren (45) jeweils in Reihe zwischen einer elektrischen Leitung (47a, 47b, 47c) und der zugehörigen Messelektrode (35a, 35b, 35c) angeordnet ist.

3. Füllstandsdetektionsvorrichtung (23) nach Anspruch 1 oder 2, **dadurch gekennzeichnet, dass** im Füllstandsdetektor (21) die Basiselektrode (33) und jeweils eine Messelektrode (35a, 35b, 35c) jeweils durch einen konstanten elektrischen Widerstand (43) miteinander verbunden sind.

4. Füllstandsdetektionsvorrichtung (23) nach einem der vorhergehenden Ansprüche, **dadurch gekennzeichnet, dass** die Messelektroden (35a, 35b, 35c) eine unterschiedliche Länge aufweisen, so dass sie füllstandsabhängig in das Reduktionsmittel in dem Speicherbehälter (19) eintauchen oder nicht, und wobei das Reduktionsmittel einen geringeren elektrischen Widerstand aufweist als der konstante elektrische Widerstand (43).

5. Füllstandsdetektionsvorrichtung (23) nach einem der vorhergehenden Ansprüche, **dadurch gekennzeichnet, dass** die Länge der Basiselektrode (33) der Länge der längsten Messelektrode (35a) entspricht.
